# EUROPÄISCHE PATENTANMELDUNG

(11) **EP 0 982 821 A1**
(43) Veröffentlichungstag der Anmeldung: **01.03.2000**
(21) Anmeldenummer: 99114504.6
(22) Anmeldetag: 23.07.1999
(51) Int. Cl.: H02B 5/00

(54) **Elektrische Schaltfeldanordnung und luftisolierte Schaltanlage**

(30) Priorität: 28.08.1998 DE 19839318
(71) Anmelder: Alstom Energietechnik GmbH, 60528 Frankfurt (DE)
(72) Erfinder: Kress, Klaus, Dr.-Ing., 36103 Flieden (DE); Rentz, Friedrich, 68723 Schwetzingen (DE)
(74) Vertreter: Schäfer, Wolfgang, Dipl.-Ing.

(57) **Zusammenfassung**

Die Erfindung betrifft eine elektrische Schaltfeldanordnung (4, 6) zum Einsatz in einer luftisolierten Schaltanlage (1), insbesondere im Hochspannungsbereich bei mehrphasigen Spannungen zwischen 50 kV und 220 kV, mit den folgenden Komponenten je Phase: einem Abgangserdungsschalter (8), Mitteln (9) zum Überwachen der anliegenden Spannung, mindestens einem Stromwandler (11, 13), mindestens einem Sammelschienen (SS)-Trennschalter (14) und einem Leistungsschalter (12). Um die von solchen Schaltfeldanordnungen (4, 6) benötigte Grundfläche möglichst klein zu halten, um zum Aufstellen solcher Schaltfeldanordnungen (4, 6) möglichst wenig Tiefbau- und Fundamentierungsarbeiten durchführen zu müssen und um die Montagezeiten von solchen Schaltfeldanordnungen (4, 6) möglichst kurz zu halten, schlägt die Erfindung vor, dass der Abgangserdungsschalter (8), die Mittel (9) zum Überwachen der anliegenden Spannung, die Stromwandler (11, 13), und der Leistungsschalter (12) auf einem gemeinsamen Gerätetragrahmen (7) angeordnet sind.

## Beschreibung

Die vorliegende Erfindung betrifft eine elektrische Schaltfeldanordnung zum Einsatz in einer luftisolierten Schaltanlage insbesondere im Hochspannungsbereich bei mehrphasigen Spannungen zwischen 50 kV und 220 kV mit den folgenden Komponenten je Phase: einem Abgangserdungsschalter, Mitteln zum Überwachen der anliegenden Spannung, mindestens einem Stromwandler, mindestens einem Sammelschienen (SS)-Trennschalter und einem Leistungsschalter.

Die Erfindung betrifft außerdem eine luftisolierte Schaltanlage zum Umspannen einer Hochspannung, insbesondere einer Spannung zwischen 50 kV und 220 kV, mit einer ersten Schaltfeldanordnung, mindestens einer Sammelschiene und einer zweiten Schaltfeldanordnung.

Schaltanlagen dienen der Sammlung und Verteilung von elektrischer Energie. In einer Schaltanlage werden bspw. mittels Überland-Hochspannungsleitungen von Kraftwerken zugeführte Hochspannungen in andere Spannungsebenen transformiert, die dann an andere Schaltanlagen, an Ortschaften oder an Industriebetriebe weitergeleitet werden. Eine solche Schaltanlage wird auch als Umspannwerke bezeichnet. Sie weist in der Regel mindestens eine als Leitungsschaltfeld ausgebildete erste Schaltfeldanordnung, mindestens eine Sammelschiene und mindestens eine als Transformatorschaltfeld ausgebildete zweite Schaltfeldanordnung auf. Die Hochspannung wird von den Hochspannungsleitungen über das Leitungsschaltfeld zu den Sammelschienen geleitet. Dort wird die Hochspannung gesammelt bzw. verteilt und an das Transformatorschaltfeld weitergeleitet. Das Transformatorschaltfeld steht mit einem Transformator in Verbindung, der die Hochspannung in eine andere Spannungsebene transformiert. Die transformierte Spannung wird von dem Transformator in Richtung Verbraucher weitergeleitet. Innerhalb der Schaltanlage und innerhalb der Schaltfeldanordnungen wird jede Phase der anliegenden Hochspannung gesondert geführt und geschaltet.

Das Leitungsschaltfeld verbindet die Hochspannungsleitungen mit den Sammelschienen. In dem Leitungsschaltfeld ist für jede Phase ein Leistungsschalter angeordnet, durch den die Verbindung zwischen den Hochspannungsleitungen und den Sammelschienen unterbrochen werden kann. Der Leistungsschalter kann die Betriebsströme und die Kurzschlußströme in der Schaltfeldanordnung schalten. Üblicherweise sind dem Leistungsschalter innerhalb des Leitungsschaltfeldes noch weitere Komponenten zugeordnet.

So sind zwischen der Hochspannungsleitung und dem Leistungsschalter noch Mittel zum Überwachen der anliegenden Spannung angeordnet, durch die die ankommende Hochspannung überwacht wird. Diese Mittel weisen in dem Leitungsschaltfeld einen Spannungswandler auf. Der Spannungswandler transformiert die anliegende Hochspannung auf eine zu der anliegenden Hochspannung proportionale niedrigere Spannung im 100-Volt-Bereich. Diese niedrigere Spannung wird dann überwacht. Außerdem sind zwischen der Hochspannungsleitung und dem Leistungsschalter ein Abgangserdungsschalter und ein Abgangstrennschalter angeordnet. Der Abgangstrennschalter kann als Klapptrennschalter oder als Drehtrennschalter ausgebildet sein. Mittels des Abgangstrennschalters wird eine sichtbare Trennung der Leiter in der Schaltfeldanordnung von den Hochspannungsleitungen ermöglicht. Durch den Abgangserdungsschalter können die von der Schaltfeldanordnung getrennten Hochspannungsleitungen geerdet werden.

Schließlich ist zwischen dem Leistungsschalter des Leitungsschaltfeldes und den Sammelschienen für jede Phase auch ein Sammelschienen (SS)-Trennschalter angeordnet, der eine sichtbare Trennung der Leiter in der Schaltfeldanordnung von den Sammelschienen ermöglicht, nachdem die Leistungsschalter die Verbindung zwischen den Hochspannungsleitungen und den Sammelschienen unterbrochen haben. Die SS-Trennschalter können als Klapptrennschalter oder als Drehtrennschalter ausgebildet sein.

Die Sammelschienen weisen für jede Phase eine eigene Leitung auf. Die Sammelschienen können als ein Einfach-Sammelschienen (ESS)-System oder als ein Doppel-Sammelschienen (DSS)-System ausgebildet sein. DSS-Systeme weisen neben einer ersten Sammelschiene noch eine zweite, redundante Sammelschiene auf, auf die im Bedarfsfall umgeschaltet werden kann. Das ist bspw. beim Ausfall einer der Sammelschienen oder bei Wartungsarbeiten an einer der Sammelschienen der Fall. Dadurch kann die Verfügbarkeit der Schaltanlage und die Versorgungssicherheit erhöht werden. Bei DSS-Systemen kann mittels der SS-Trennschalter die Schaltfeldanordnung wahlweise an eine der beiden Sammelschienen angeschlossen, die Schaltfeldanordnung vollständig von der Sammelschiene getrennt oder zwischen den beiden Sammelschienen umgeschaltet werden. Um die Möglichkeit zu haben, zwischen den beiden Sammelschienen unterbrechungsfrei umschalten zu können, muß zwischen einem der Leistungsschalter der Schaltfeldanordnung und jeder der beiden Sammelschienen jeweils ein SS-Trennschalter angeordnet sein.

Das Transformatorschaltfeld verbindet die Sammelschienen mit dem Transformator. In dem Transformatorschaltfeld ist wie in dem Leitungsschaltfeld ebenfalls für jede Phase ein Leistungsschalter angeordnet. Durch den Leistungsschalter kann die Verbindung zwischen den Sammelschienen und dem Transformator unterbrochen werden. Üblicherweise sind neben dem Leistungsschalter innerhalb des Transformatorschaltfeldes noch weitere Komponenten angeordnet.

So ist zwischen den Sammelschienen und dem Leistungsschalter noch ein Sammelschienen (SS)-Trennschalter angeordnet, der eine sichtbare Trennung der Leiter in der Schaltfeldanordnung von den Sammelschienen ermöglicht, nachdem die Leistungsschalter die Verbindung zwischen den Sammelschienen und dem Transformator unterbrochen haben. Die SS-Trennschalter können als Klapptrennschalter oder als Drehtrennschalter ausgebildet sein. Außerdem ist dort ein Stromwandler angeordnet, der den Betriebs- und den Kurzschlußstrom des Schaltfeldes überwacht.

Zwischen dem Leistungsschalter des Transformatorschaltfeldes und dem Transformator sind Mittel zum Überwachen der anliegenden Spannung angeordnet, durch die die anliegende Hochspannung überwacht wird. Diese Mittel sind in dem Transformatorschaltfeld üblicherweise als ein Überspannungsableiter ausgebildet. Spannungen, die einen vorgegebenen Spannungsgrenzwert überschreiten, werden durch den Überspannungsableiter abgeleitet, um eine Beschädigung des Transformators zu verhindern. Schließlich kann zwischen dem Leistungsschalter und dem Transformator ein Abgangserdungsschalter angeordnet sein. Auf einen Abgangstrennschalter wird in Transformatorschaltfeldern üblicherweise verzichtet.

Die vorliegende Erfindung ist nicht auf als Umspannwerke ausgebildete Schaltanlagen beschränkt. Es gibt auch Schaltanlagen, die lediglich Verteilzwecken dienen, ohne daß darin Transformationsvorgänge vorgenommen werden. Die Erfindung soll sich auch auf solche Schaltanlagen beziehen, die keine Sammelschienen aufweisen. Sammelschienen werden nur in solchen Schaltanlagen benötigt, die mehrere Schaltfeldanordnungen aufweisen. Eine Stichleitung benötigt bspw. nur eine Schaltfeldanordnung und weist demnach auch keine Sammelschienen auf.

Außerdem ist die Erfindung nicht auf als Leitungsschaltfelder oder als Transformatorschaltfelder ausgebildete Schaltfeldanordnungen beschränkt. Eine Schaltfeldanordnung kann auch als sog. Abgangsfeld (Freileitung oder Kabel), als Meßfeld oder als ein anderes Schaltfeld ausgebildet sein.

Bei Schaltanlagen mit luftisolierten Schaltfeldanordnungen müssen die einzelnen Komponenten der Schaltfelder aufgrund physikalischer Gesetzmäßigkeiten und entsprechender Normen und Regelungen abhängig von der Größe der zu verarbeitenden Hochspannungen und Ströme in bestimmten Abständen zueinander angeordnet sein. Dadurch wird verhindert, daß es bei den anliegenden hohen Spannungen und Strömen zu Kurzschlüssen zwischen den einzelnen Leiter in der Schaltanlage kommt. Die Leiter verbinden die Komponenten der Schaltfeldanordnungen mit den anderen Elementen der Schaltanlage elektrisch leitend. Wegen der vorgeschriebenen Mindestabstände zwischen den Komponenten und den Leitern sind die Möglichkeiten, die Grundfläche von Schaltanlagen zu reduzieren, begrenzt. Insbesondere in Innenstädten, wo die Grundstückspreise sehr hoch sind, ist es jedoch wünschenswert, die Grundfläche von Schaltanlagen möglichst gering zu halten. Dadurch könnte die für Schaltanlagen benötigte Grundstücksfläche reduziert, und die Kosten für die Errichtung einer Schaltanlage könnten reduziert werden.

Ein weiterer Kostenfaktor bei der Errichtung von Schaltanlagen ist die Tatsache, daß üblicherweise jede Komponente einer Schaltfeldanordnung auf mindestens zwei Stützen in einem eigenen Fundament im Untergrund verankert ist. Das Ausheben des Untergrunds und das Einbringen eines Fundaments in den Aushub ist mit einem erheblichen Arbeits- und Kostenaufwand verbunden. Aufgrund besonders hoher Anforderungen an die Statik müssen die Komponenten sicher und stabil im Untergrund verankert sein. Die hohen Anforderungen an die Statik ergeben sich daraus, daß wegen der oben beschriebenen magnetischen Kräfte zwischen den Leitern einer Schaltfeldanordnung, die über Isolatoren und die Stützen von ihren Verankerungen im Untergrund beabstandet sind, im Kurzschlußfall große Hebelkräfte auf die Verankerungen und die Fundamente der Komponenten wirken.

Bei den bekannten Schaltfeldanordnungen ist es somit nachteilig, daß sie eine große Grundfläche aufweisen und die Komponenten der Schaltfeldanordnungen über eine große Anzahl von Stützen in großen und stabilen Fundamenten verankert werden müssen. Außerdem müssen die einzelnen Komponenten an dem Aufstellungsort zu den Schaltfeldanordnungen zusammengebaut und verschaltet werden. Das ist sehr aufwendig und führt zu langen Montagezeiten.

Die Aufgabe der vorliegenden Erfindung besteht deshalb darin, eine Schaltfeldanordnung der eingangs genannten Art dahingehend auszugestalten und weiterzubilden, daß sie die oben genannten Nachteile vermeidet.

Zur Lösung dieser Aufgabe schlägt die Erfindung ausgehend von der Schaltfeldanordnung der eingangs genannten Art vor, daß der Abgangserdungsschalter, die Mittel zum Überwachen der anliegenden Spannung, die Stromwandler und der Leistungsschalter auf einem gemeinsamen Gerätetragrahmen angeordnet sind.

Die einzelnen Komponenten sind derart auf dem Gerätetragrahmen angeordnet, daß der Gerätetragrahmen trotz der vorgeschriebenen Mindestabstände zwischen den Leitern und Komponenten der Schaltfeldanlagen eine besonders kleine Grundfläche aufweist. Aus Kostengründen werden für die einzelnen Komponenten frei erhältliche Standardkomponenten verwendet, die auf dem Gerätetragrahmen zu der erfindungsgemäßen besonders kompakten integrierten Schaltfeldanordnung zusammengesetzt werden.

Die Komponenten können schon im Herstellungswerk auf den Gerätetragrahmen montiert werden. Im Herstellungswerk lassen sich die Komponenten einfacher und schneller montieren, da dort im Gegensatz zu dem Aufstellungsort, in der Regel eine wesentlich bessere Ausstattung mit Werkzeug und Montagemitteln (Hebezeug, etc.) gegeben ist. Im Herstellungswerk ist üblicherweise auch mehr Platz zur Montage der Komponenten vorhanden als vor Ort, und im Herstellungswerk kann in der Regel witterungsunabhängig gearbeitet werden.

Der Gerätetragrahmen läßt sich als Einheit zu dem Aufstellungsort transportieren, wo die erfindungsgemäßen Schaltfeldanordnungen als Leitungsschaltfeld und als Transformatorschaltfeld innerhalb kurzer Zeit zu einer kompletten Schaltanlage zusammengesetzt werden können. Dadurch lassen sich die Montagezeiten am Aufstellungsort erheblich reduzieren.

Darüber hinaus übernimmt der Gerätetragrahmen eine wesentliche Stabilitätsfunktion innerhalb der Schaltfeldanordnung. Er sorgt dafür, daß die Mindestabstände zwischen den Komponenten der Schaltfeldanordnung auch dann eingehalten werden, wenn große Anziehungskräfte zwischen den Leitern der Schaltanlage wirken, die als Hebelkräfte auf die Komponenten wirken.

Die erfindungsgemäße Schaltfeldanordnung kann für Einzel-Sammelschienen (ESS)-Systeme oder für Doppel-Sammelschienen (DSS)-Systeme eingesetzt werden. Bei DSS-Systemen muß für jede Phase zwischen einem der Leistungsschalter der Schaltfeldanordnung und jeder der beiden Sammelschienen jeweils ein SS-Trennschalter angeordnet sein. Die zwei SS-Trennschalter sind vorzugsweise nicht auf dem Gerätetragrahmen angeordnet, da dieser sonst aufgrund der einzuhaltenden Mindestabstände zwischen den Leitern, den SS-Trennschaltern und den übrigen Komponenten sehr große Abmessungen aufweisen würde. Bei Schaltfeldanordnungen für DSS-Systeme lassen sich die zwei SS-Trennschalter besser unabhängig von dem Gerätetragrahmen in herkömmlicher Art und Weise zwischen der Schaltfeldanordnung und den Sammelschienen anordnen.

Bei Einzel-Sammelschienen genügt jedoch ein SS-Trennschalter je Phase, der problemlos zusammen mit den anderen Komponenten auf dem Gerätetragrahmen angeordnet werden kann, ohne daß dessen Abmessungen zu groß werden. Durch eine Integration des SS-Trennschalters in die Schaltfeldanordnung für ESS-Systeme kann die von der Schaltfeldanordnung einschließlich der SS-Trennschalter benötigte Grundfläche im Vergleich zum Stand der Technik weiter verringert werden. Deshalb wird gemäß einer vorteilhaften Weiterbildung der Erfindung vorgeschlagen, daß die Sammelschienen (SS)-Trennschalter auf dem Gerätetragrahmen angeordnet sind.

Insbesondere für den Fall, daß die erfindungsgemäße Schaltfeldanordnung als Leitungsschaltfeld eingesetzt wird, schlägt die Erfindung vor, daß die Mittel zum Überwachen der anliegenden Spannung einen Spannungswandler aufweisen, der die anliegende Spannung auf eine zu der anliegenden Spannung proportionale niedrigere Spannung heruntertransformiert, die dann überwacht wird.

Falls die erfindungsgemäße Schaltfeldanordnung als Transformatorschaltfeld eingesetzt wird, schlägt die Erfindung vor, daß die Mittel zum Überwachen der anliegenden Spannung als ein Überspannungsableiter ausgebildet sind, der Spannungen, die einen vorgegebenen Spannungsgrenzwert überschreiten, ableitet.

Insbesondere für den Fall, daß die erfindungsgemäße Schaltfeldanordnung als Leitungsschaltfeld eingesetzt wird, schlägt die Erfindung darüber hinaus vor, daß die Schaltfeldanordnung als weitere Komponente einen Abgangstrennschalter aufweist, der auf dem Gerätetragrahmen angeordnet ist.

Der Abgangstrennschalter ist vorteilhafterweise als ein Drehtrennschalter ausgebildet. Die Aufnahmekontakte für die Schaltkontakte des Abgangs-Drehtrennschalters sind vorzugsweise an dem distalen Ende eines ersten Durchführungselements auf einem ersten Stromwandler und auf dem distalen Ende eines ersten Isolatorelements auf den Mitteln zum Überwachen der anliegenden Spannung ausgebildet. Durch eine derartige Ausgestaltung des Abgangstrennschalters ist eine besonders platzsparende Anordnung der Komponenten der erfindungsgemäßen Schaltfeldanordnung möglich. Die Aufnahmekontakte werden nicht an den distalen Enden von gesonderten Isolatorelementen angeordnet, die zusätzlich Platz auf dem Gerätetragrahmen beanspruchen würden. Vielmehr werden die Aufnahmekontakte an den distalen Enden der Durchführungs- und Isolatorelemente von bereits vorhandenen Komponenten angeordnet.

Der SS-Trennschalter ist vorteilhafterweise als ein Drehtrennschalter ausgebildet. Die Aufnahmekontakte für die Schaltkontakte des SS-Drehtrennschalters sind vorzugsweise an dem distalen Ende eines zweiten Isolatorelements auf einem zweiten Stromwandler und auf dem distalen Ende eines zweiten Isolatorelements ausgebildet. Durch eine derartige Ausgestaltung des SS-Trennschalters ist eine besonders platzsparende Anordnung der Komponenten der erfindungsgemäßen Schaltfeldanordnung möglich. Zumindest einer der Aufnahmekontakte wird nicht an dem distalen Ende eines gesonderten Isolatorelements angeordnet, das zusätzlichen Platz auf dem Gerätetragrahmen beanspruchen würde. Vielmehr wird der Aufnahmekontakt an dem distalen Ende des Durchführungselements einer bereits vorhandenen Komponente angeordnet.

Vorteilhafterweise ist der Abgangserdungsschalter als ein Klapptrennschalter ausgebildet, wobei der Aufnahmekontakt für den Schaltkontakt des Klappschalters an dem distalen Ende des ersten Isolatorelements ausgebildet ist. Auch durch diese Maßnahme kann weiter Platz auf dem Gerätetragrahmen eingespart und der Gerätetragrahmen mit einer kleineren Grundfläche ausgebildet werden.

Die Komponenten auf dem Gerätetragrahmen der erfindungsgemäßen Schaltfeldanordnung sind gemäß einer vorteilhaften Weiterbildung der Erfindung in der nachfolgenden Reihenfolge angeordnet:
- Abgangserdungsschalter,
- Mittel zur Überwachung der anliegenden Spannung,
- Abgangstrennschalter,
- erster Stromwandler,
- Leistungsschalter,
- zweiter Stromwandler und
- SS-Trennschalter.
Die erfindungsgemäße Schaltfeldanordnung gemäß dieser Weiterbildung wird vorzugsweise für ESS-System eingesetzt. Aus diesem Grund ist der SS-Trennschalter auf dem Gerätetragrahmen der Schaltfeldanordnung integriert. Beim Einsatz mit DES-Systemen sind die SS-Trennschalter vorzugsweise nicht auf dem Gerätetragrahmen der erfindungsgemäßen Schaltfeldanordnung angeordnet. Vielmehr sind die SS-Trennschalter bei DSS-Systemen zwischen den Schaltfeldanordnungen und den Sammelschienen als gesonderte Komponenten ausgebildet.

Die aufgeführte Reihenfolge der Komponenten auf dem Gerätetragrahmen gilt sowohl bei einem Einsatz der erfindungsgemäßen Schaltfeldanordnung als Leitungsschaltfeld als auch bei einem Einsatz als Transformatorschaltfeld. Allerdings wird beim Einsatz der erfindungsgemäßen Schaltfeldanordnung als Transformatorschaltfeld üblicherweise auf einen Abgangstrennschalter verzichtet.

Der Abgangserdungsschalter ist beim Einsatz der Schaltfeldanordnung als Leitungsschaltfeld mit der Hochspannungsleitung verbunden. Beim Einsatz der Schaltfeldanordnung als Transformatorschaltfeld ist der Abgangserdungsschalter mit dem Transformator verbunden.

Gemäß einer vorteilhaften Weiterbildung der Erfindung sind die Komponenten auf dem Gerätetragrahmen fertig verdrahtet, wobei die Verdrahtung in einen Schaltkasten führt, der auf dem Gerätetragrahmen angeordnet ist. Eine derart zu einer einzigen integrierten Baugruppe zusammengeschlossene Schaltfeldanordnung kann in vorteilhafter Weise im Herstellungswerk schneller und unter besseren Arbeitsbedingungen als am Aufstellungsort montiert und verdrahtet werden. Eine anschließende dataillierte Funktionsprüfung kann ebenfalls noch im Herstellungswerk mit hochwertigen Meßinstrumenten und unter konstanten Umgebungsbedingungen mit wesentlich höherer Zuverlässigkeit durchgeführt werden als dies am Aufstellungsort möglich wäre. Im Rahmen der Funktionsprüfung eventuell aufgetretene Funktionsstörungen können dann ohne Zeitverlust sofort im Herstellungswerk behoben werden.

Die fertig montierte und verkabelte integrierte Baugruppe wird nach der Funktionsprüfung zum Aufstellungsort transportiert, wo sie lediglich mittels eines Hebezeugs auf einem vorbereiteten Fundament verankert und an die Hochspannungsleitung, die Sammelschienen und den Transformator angeschlossen werden muß. Im Rahmen einer abschließenden Funktionsprüfung muß lediglich überprüft werden, ob die Schaltfeldanordnung auch zusammen mit den übrigen Elementen der Schaltanlage fehlerfrei arbeitet.

Der Schaltkasten enthält vorteilhafterweise eine Schaltfeld-Steuereinrichtung und/oder eine Schutzeinrichtung. Des weiteren enthält der Schaltkasten vorzugsweise eine Übergabe-Klemmleiste zu einer Schaltanlagen-Steuerung. Der Anschluß an eine Schaltanlagen-Steuerung am Aufstellungsort wird durch die Übergabe-Klemmleiste wesentlich vereinfacht.

Gemäß einer vorteilhaften Weiterbildung der vorliegenden Erfindung wird vorgeschlagen, daß der Gerätetragrahmen auf vier Stützen steht, die jeweils in ein Fundament eingebettet sind. Das bedeutet, daß die gesamte erfindungsgemäße Schaltfeldanordnung über lediglich vier Stützen und deren Fundamente im Untergrund verankert ist. Dadurch können die Tiefbau- und Fundamentierungsarbeiten am Aufstellungsort im Vergleich zum Stand der Technik erheblich reduziert werden. Erst durch die Ausbildung der erfindungsgemäßen Schaltfeldanordnung als eine auf einem Gerätetragrahmen integrierte Baugruppe ist es möglich, sämtliche Komponenten einer Schaltfeldanordnung mittels lediglich vier Stützen sicher im Untergrund zu verankern, ohne daß die Stabilität der Schaltfeldanordnung beeinträchtigt wird, da der Gerätetragrahmen eine entscheidende Stabilitätsfunktion übernimmt.

Um die erfindungsgemäße Schaltfeldanordnung einfacher transportieren und handhaben zu können, schlägt die Erfindung gemäß einer bevorzugten Ausführungsform vor, daß der Gerätetragrahmen in mindestens zwei Transportelemente zerlegbar ist. Der Gerätetragrahmen weist an den Kanten der Transportelemente vorteilhafterweise lösbare Verdrahtungsverbindungen auf. Vorzugsweise sind die Verdrahtungsverbindungen als Stecker ausgebildet. Dadurch kann die erfindungsgemäße Schaltfeldanordnung am Aufstellungsort aus den Transportelementen schnell und einfach zusammengesetzt und verschaltet werden.

Eine weitere Aufgabe der vorliegenden Erfindung besteht darin, eine Schaltanlage der eingangs genannten Art dahingehend auszugestalten und weiterzubilden, daß die zum Aufstellen der Schaltanlage benötigte Grundfläche möglichst klein ist, daß zum Aufstellen einer solchen Schaltanlage möglichst wenig Tiefbau- und Fundamentierungsarbeiten durchgeführt werden müssen und daß die Montagezeit einer solchen Schaltanlage möglichst kurz ist.

Zur Lösung dieser Aufgabe schlägt die Erfindung ausgehend von der Schaltanlage der eingangs genannten Art vor, daß zumindest eine der Schaltfeldanordnungen als eine elektrische Schaltfeldanordnung nach einem der Ansprüche 1 bis 18 ausgebildet ist.

Im folgenden werden drei bevorzugte Ausführungsbeispiele der vorliegenden Erfindung anhand der Zeichnungen näher erläutert. Es zeigen:
- Fig. 1: eine erfindungsgemäße luftisolierte Schaltanlage mit zwei erfindungsgemäßen Schaltfeldanordnungen in Seitenansicht;
- Fig. 2: eine erfindungsgemäße Schaltfeldanordnung gemäß einer ersten Ausführungsform in Seitenansicht;
- Fig. 3: die Schaltfeldanordnung aus Fig. 2 in Draufsicht;
- Fig. 4: eine erfindungsgemäße Schaltfeldanordnung gemäß einer zweiten Ausführungsform in Seitenansicht; und
- Fig. 5: eine erfindungsgemäße Schaltfeldanordnung gemäß einer dritten Ausführungsform in Seitenansicht.

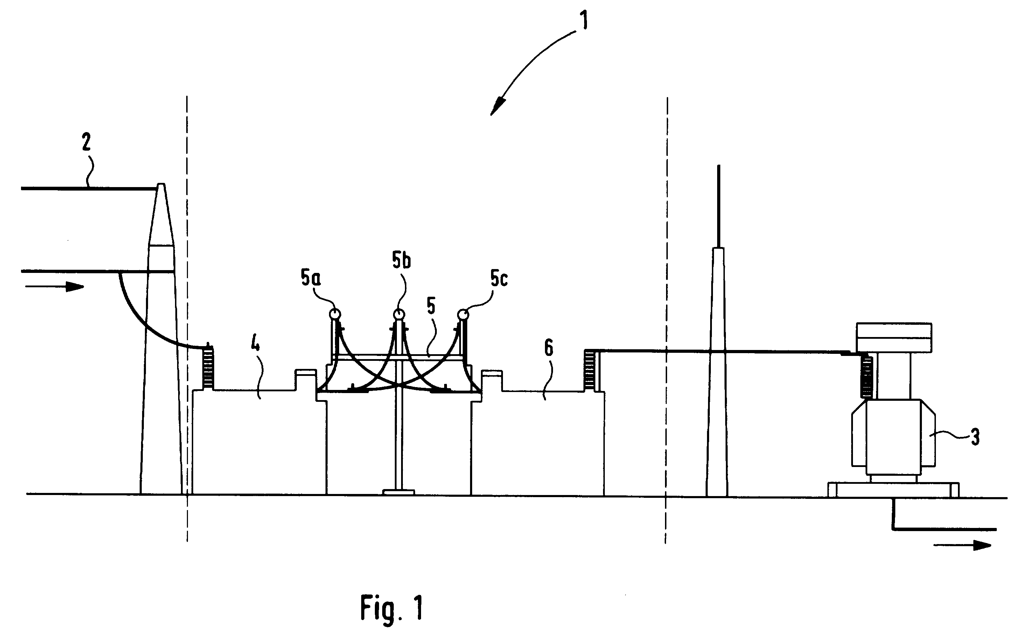

In Fig. 1 ist eine erfindungsgemäße luftisolierte Schaltanlage in ihrer Gesamtheit mit dem Bezugszeichen 1 gekennzeichnet. Die Schaltanlage 1 dient zum Umspannen einer Hochspannung im Bereich von etwa 50 kV bis etwa 220 kV von einer Hochspannungsleitung 2 auf einen Transformator 3. Über die Hochspannungsleitung 2 wird die Hochspannung bspw. von einem Kraftwerk (nicht dargestellt) über weite Strecken an die Schaltanlage 1 herangeführt. Der Transformator 3 transformiert die Hochspannung auf eine andere Spannung im Bereich von bspw. 1 kV bis 50 kV. Die transformierte Spannung wird dann von dem Transformator 3 an andere Schaltanlagen, an Ortschaften oder an Industriebetriebe (nicht dargestellt) weitergeleitet.

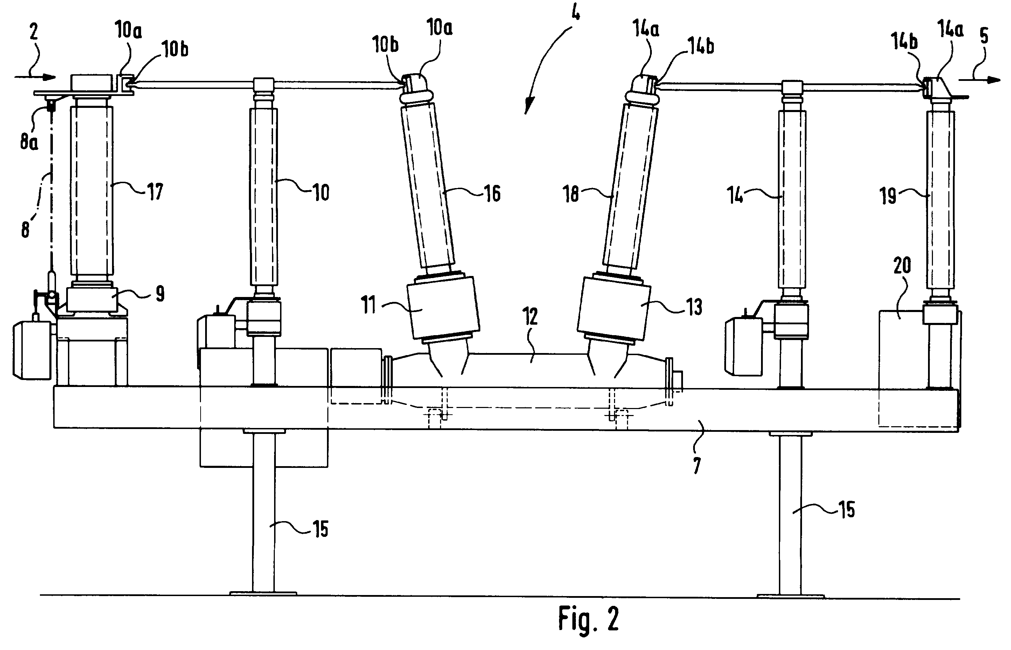

Die Schaltanlage 1 weist eine als Leitungsschaltfeld ausgebildete erste Schaltfeldanordnung 4, eine Sammelschiene 5 und eine zweite Schaltfeldanordnung 6 auf. Die zweite Schaltfeldanordnung 6 ist als ein Transformatorschaltfeld ausgebildet. Beide Schaltfeldanordnungen 4, 6 sind in Fig. 1 lediglich symbolisch dargestellt. Wie aus den Fig. 2 bis 5 hervorgeht, weisen sie beide den Aufbau einer erfindungsgemäßen Schaltfeldanordnung auf. Die Sammelschiene 5 ist als ein Einfach-Sammelschienen (ESS)-System ausgebildet und weist für jede Phase einer 3-Phasen-Spannung eine eigene Leitung 5a, 5b, 5c auf.

In Fig. 2 ist die erste Schaltfeldanordnung 4 in einer ersten Ausführungsform für den Betrieb mit Einfach-Sammelschienen (ESS)-Systemen dargestellt. Die Schaltfeldanordnung 4 weist mehrere Komponenten auf, die auf einem Gerätetragrahmen 7 angeordnet sind. Im Einzelnen sind auf dem Gerätetragrahmen 7 von links nach rechts ein als Klapptrennschalter ausgebildeter Abgangserdungsschalter 8, als Spannungswandler ausgebildete Mittel 9 zum Überwachen der anliegenden Spannung, ein als Drehtrennschalter ausgebildeter Abgangstrennschalter 10, ein erster Stromwandler 11, ein Leistungsschalter 12, ein zweiter Stromwandler 13 und ein als Drehtrennschalter ausgebildeter Sammelschienen (SS)-Trennschalter 14 angeordnet. Der Gerätetragrahmen 7 ist auf vier Stützen 15 in einem Fundament im Untergrund verankert.

Die erste Schaltfeldanordnung 4 aus Fig. 2 verbindet die Hochspannungsleitungen 2 mit den Sammelschienen 5. Durch den Leistungsschalter 12 kann die Verbindung zwischen den Hochspannungsleitungen 2 und den Sammelschienen 5 unterbrochen werden. Mittels des Abgangstrennschalters wird eine sichtbare Trennung der Leiter in der Schaltfeldanordnung 4 von den Hochspannungsleitungen 2 ermöglicht. Durch den Abgangserdungsschalter 8 können die von der Schaltfeldanordnung 4 getrennten Hochspannungsleitungen 2 geerdet werden. Durch die Mittel 9 zum Überwachen der anliegenden Spannung wird die ankommende Hochspannung überwacht. Dazu wird die Hochspannung durch einen Spannungswandler in eine zu der anliegenden Hochspannung proportionale niedrigere Spannung im 100-Volt-Bereich transformiert, die dann überwacht wird. Die Stromwandler 11, 13 überwachen den Betriebs- und den Kurzschlussstrom der Schaltfeldanordnung 4. Durch den SS-Trennschalter 14 wird eine sichtbare Trennung der Schaltfeldanordnung 4 von den Sammelschienen 5 ermöglicht.

Der Abgangstrennschalter 10 und der SS-Trennschalter 14 sind als Drehtrennschalter ausgebildet. Die Aufnahmekontakte 10a für die Schaltkontakte 10b des Abgangstrennschalters 10 sind an dem distalen Ende eines ersten Durchführungselements 16 auf dem ersten Stromwandler 11 und auf dem distalen Ende eines ersten Isolatorelements 17 auf den Mitteln 9 zum Überwachen der anliegenden Spannung ausgebildet. Die Aufnahmekontakte 14a für die Schaltkontakte 14b des SS-Trennschalters 14 sind an dem distalen Ende eines zweiten Durchführungselements 18 auf dem zweiten Stromwandler 13 und auf dem distalen Ende eines zweiten Isolatorelements 19 ausgebildet. Durch eine derartige Ausgestaltung des Abgangstrennschalters 10 und des SS-Trennschalters 14 wird eine besonders platzsparende Anordnung der Komponenten der erfindungsgemäßen Schaltfeldanordnung 4 möglich. Der Abgangserdungsschalter 8 ist als ein Klappschalter ausgebildet. Der Aufnahmekontakt 8a für den Schaltkontakt 8b des Klappschalters ist an dem distalen Ende des ersten Isolatorelements 17 ausgebildet. Dadurch kann die von der ersten Schaltungsanordnung 4 benötigte Grundfläche weiter reduziert werden.

Die Komponenten auf dem Gerätetragrahmen 7 sind fertig verdrahtet, und die Verdrahtung führt in einen Schaltkasten 20, der ebenfalls auf dem Gerätetragrahmen 7 angeordnet ist. Der Schaltkasten 20 enthält eine Schaltfeld-Steuereinrichtung und/oder eine Schutzeinrichtung. Außerdem enthält der Schaltkasten 20 eine Übergabe-Klemmleiste zu einer Steuerung der Schaltanlage 1. Der Gerätetragrahmen 7 ist in mehrere Transportelemente zerlegbar. Die Verdrahtungen der Komponenten sind an den Kanten der Transportelemente als lösbare Verdrahtungsverbindungen, bspw. als Stecker, ausgebildet.

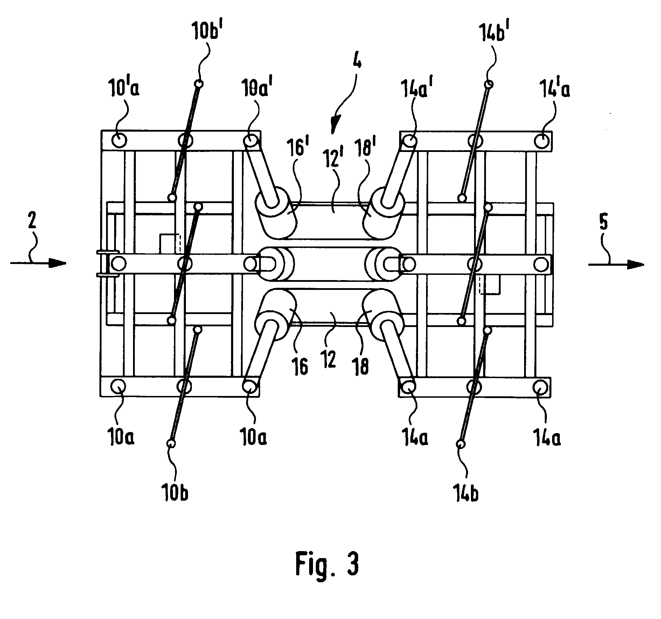

In Fig. 3 ist die erste Schaltfeldanordnung 4 aus Fig. 2 in Draufsicht dargestellt. Deutlich ist zu erkennen, dass in der Schaltfeldanordnung 4 jede der drei Phasen der Hochspannung gesondert geführt und geschaltet wird. Somit weisen der Abgangstrennschalter 10 und der SS-Trennschalter 14 jeweils drei gesonderte Schaltelemente auf. In Fig. 3 sind Bezugszeichen nur für die erste und die dritte Phase angegeben. Die Bezugszeichen der dritten Phase sind durch einen Indexstrich gekennzeichnet.

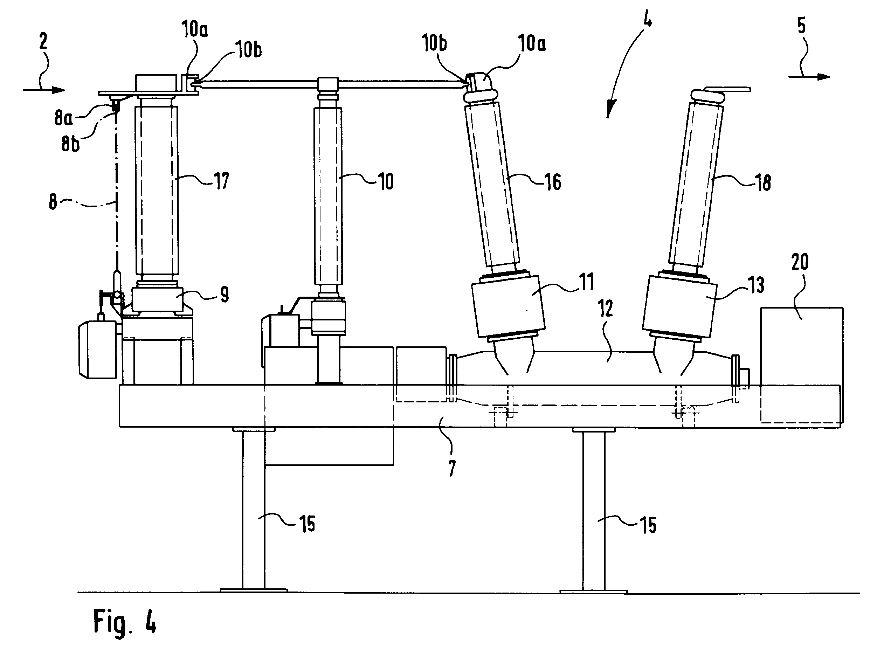

In Fig. 4 ist eine zweite Ausführungsform der ersten Schaltfeldanordnung 4 aus Fig. 1 dargestellt. Die Schaltfeldanordnung 4 gemäß Fig. 4 wird für Doppel-Sammelschienen (DSS)-Systeme eingesetzt. Bei DSS-Systemen werden zwischen einem Leistungsschalter 12 und jeder der Sammelschienen 5 ein SS-Trennschalter 14, insgesamt also zwei SS-Trennschalter 14, benötigt. DSS-Systeme werden zur Erhöhung der Versorgungssicherheit und der Verfügbarkeit der Schaltanlage 1 eingesetzt, da neben der gerade benutzten Sammelschiene 5 eine zweite, redundante Sammelschiene 5 zur Verfügung steht, auf die im Bedarfsfall mittels der SS-Trennschalter 14 umgeschaltet werden kann. Außerdem kann zu Wartungszwecken die Schaltanlage 1 von einer Sammelschiene 5 auf die andere Sammelschiene 5 umgeschaltet werden. Die zwei SS-Trennschalter 14 der Schaltfeldanordnung 4 sind nicht auf dem Gerätetragrahmen 7 angeordnet, da dieser sonst sehr große Abmessungen aufweisen würde. Die beiden SS-Trennschalter 14 sind bei der Schaltfeldanordnung 4 aus Fig. 4 unabhängig von dem Gerätetragrahmen 7 in herkömmlicher Art und Weise zwischen der Schaltfeldanordnung 4 und den Sammelschienen 5 angeordnet.

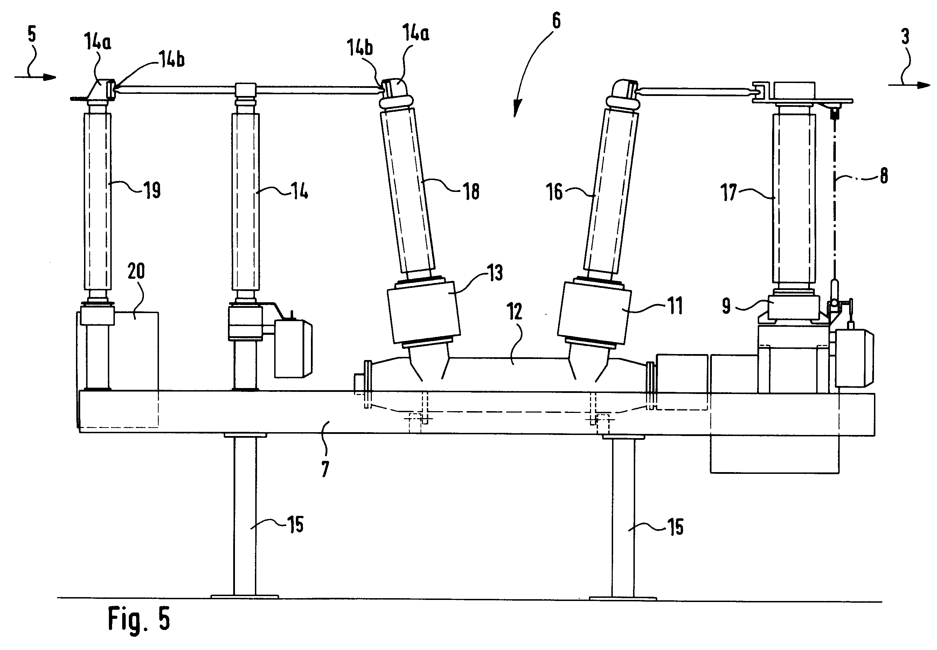

In Fig. 5 ist eine dritte Ausführungsform einer erfindungsgemäßen Schaltfeldanordnung dargestellt, nämlich die als Transformatorschaltfeld ausgebildete zweite Schaltfeldanordnung 6 aus Fig. 1. Die zweite Schaltfeldanordnung 6 verbindet die Sammelschienen 5 mit dem Transformator 3. Wie in der ersten Schaltfeldanordnung 4 ist auch in der zweiten Schaltfeldanordnung 6 ein Leistungsschalter 12 angeordnet. Durch den Leistungsschalter 12 kann die Verbindung zwischen den Sammelschienen 5 und dem Transformator 3 unterbrochen werden.

Zwischen den Sammelschienen 5 und dem Leistungsschalter 12 ist ein SS-Trennschalter 14 angeordnet, der eine sichtbare Trennung der Schaltfeldanordnung 6 von den Sammelschienen 5 ermöglicht. Außerdem weist die Schaltfeldanordnung 6 zwei Stromwandler 11, 13 auf, die den Betriebs- und den Kurzschlußstrom der Schaltfeldanordnung 6 überwachen.

Zwischen dem Leistungsschalter 12 und dem Transformator 3 sind als Überspannungsableiter ausgebildete Mittel 9 zum Überwachen der anliegenden Spannung angeordnet. Spannungen, die einen vorgegebenen Spannungsgrenzwert überschreiten, werden durch den Überspannungsableiter abgeleitet, um eine Beschädigung des Transformators 3 zu verhindern. Schließlich weist die Schaltfeldanordnung 6 auch einen Abgangserdungsschalter 8 auf, der als Klapptrennschalter ausgebildet ist. Auf den Abgangstrennschalter 10 wird in der zweiten Schaltfeldanordnung 6 verzichtet.

## Patentansprüche

1. Elektrische Schaltfeldanordnung (4, 6) zum Einsatz in einer luftisolierten Schaltanlage (1), insbesondere im Hochspannungsbereich bei mehrphasigen Spannungen zwischen 50 kV und 220 kV, mit den folgenden Komponenten je Phase: einem Abgangserdungsschalter (8), Mitteln (9) zum Überwachen der anliegenden Spannung, mindestens einem Stromwandler (11, 13), mindestens einem Sammelschienen (SS)-Trennschalter (14) und einem Leistungsschalter (12), **dadurch gekennzeichnet**, daß der Abgangserdungsschalter (8), die Mittel (9) zum Überwachen der anliegenden Spannung, die Stromwandler (11, 13) und der Leistungsschalter (12) auf einem gemeinsamen Gerätetragrahmen (7) angeordnet sind.

2. Schaltfeldanordnung (4) nach Anspruch 1, dadurch gekennzeichnet, daß die Sammelschienen (SS)-Trennschalter (14) auf dem Gerätetragrahmen (7) angeordnet sind.

3. Schaltfeldanordnung (4, 6) nach Anspruch 1 oder 2, dadurch gekennzeichnet, daß die Mittel (9) zum Überwachen der anliegenden Spannung einen Spannungswandler aufweisen, der die anliegende Spannung auf eine zu der anliegenden Spannung proportionale niedrigere Spannung heruntertransformiert, die dann überwacht wird.

4. Schaltfeldanordnung (4, 6) nach Anspruch 1 oder 2, dadurch gekennzeichnet, daß die Mittel (9) zum Überwachen der anliegenden Spannung als ein Überspannungsableiter ausgebildet sind, der Spannungen, die einen vorgegebenen Spannungsgrenzwert überschreiten, ableitet.

5. Schaltfeldanordnung (4) nach einem der Ansprüche 1 bis 4, dadurch gekennzeichnet, daß sie als weitere Komponente einen Abgangstrennschalter (10) aufweist, der auf dem Gerätetragrahmen (7) angeordnet ist.

6. Schaltfeldanordnung (4) nach Anspruch 5, dadurch gekennzeichnet, daß der Abgangstrennschalter (10) als ein Drehtrennschalter ausgebildet ist.

7. Schaltfeldanordnung (4) nach Anspruch 6, dadurch gekennzeichnet, daß die Aufnahmekontakte (10a) für die Schaltkontakte (10b) des Abgangs-Drehtrennschalters (10) an dem distalen Ende eines ersten Durchführungselements (16) auf einem ersten Stromwandler (11) und auf dem distalen Ende eines ersten Isolatorelements (17) auf den Mitteln (9) zum Überwachen der anliegenden Spannung ausgebildet sind.

8. Schaltfeldanordnung (4, 6) nach einem der Ansprüche 1 bis 7, dadurch gekennzeichnet, daß der SS-Trennschalter (14) als ein Drehtrennschalter ausgebildet ist.

9. Schaltfeldanordnung (4, 6) nach Anspruch 8, dadurch gekennzeichnet, daß die Aufnahmekontakte (14a) für die Schaltkontakte (14b) des SS-Drehtrennschalters (14) an dem distalen Ende eines zweiten Durchführungselements (18) auf einem zweiten Stromwandler (13) und auf dem distalen Ende eines zweiten Isolatorelements (19) ausgebildet sind.

10. Schaltfeldanordnung (4, 6) nach einem der Ansprüche 7 bis 9, dadurch gekennzeichnet, daß der Abgangserdungsschalter (8) als ein Klappschalter ausgebildet ist, wobei der Aufnahmekontakt (8a) für den Schaltkontakt (8b) des Klappschalters an dem distalen Ende des ersten Isolatorelements (17) ausgebildet ist.

11. Schaltfeldanordnung (4) nach einem der Ansprüche 5 bis 10, dadurch gekennzeichnet, daß die Komponenten auf dem Gerätetragrahmen (7) in der nachfolgenden Reihenfolge angeordnet sind:
- Abgangserdungsschalter (8),
- Mittel (9) zur Überwachung der anliegenden Spannung,
- Abgangstrennschalter (10),
- erster Stromwandler (11),
- Leistungsschalter (12),
- zweiter Stromwandler (13) und
- SS-Trennschalter (14).

12. Schaltfeldanordnung (4, 6) nach einem der Ansprüche 1 bis 11, dadurch gekennzeichnet, daß die Komponenten auf dem Gerätetragrahmen (7) fertig verdrahtet sind, wobei die Verdrahtung in einen Schaltkasten (20) führt, der auf dem Gerätetragrahmen (7) angeordnet ist.

13. Schaltfeldanordnung (4, 6) nach Anspruch 12, dadurch gekennzeichnet, daß der Schaltkasten (20) eine Schaltfeld-Steuereinrichtung und/oder eine Schutzeinrichtung enthält.

14. Schaltfeldanordnung (4, 6) nach Anspruch 12 oder 13, dadurch gekennzeichnet, daß der Schaltkasten (20) eine Übergabe-Klemmleiste zu einer Schaltanlagen-Steuerung enthält.

15. Schaltfeldanordnung (4, 6) nach einem der Ansprüche 1 bis 14, dadurch gekennzeichnet, daß der Gerätetragrahmen (7) auf vier Stützen (15) steht, die jeweils in ein Fundament eingebettet sind.

16. Schaltfeldanordnung (4, 6) nach einem der Ansprüche 1 bis 15, dadurch gekennzeichnet, daß der Gerätetragrahmen (7) in mindestens zwei Transportelemente zerlegbar ist.

17. Schaltfeldanordnung (4, 6) nach Anspruch 16, dadurch gekennzeichnet, daß der Gerätetragrahmen (7) an den Kanten der Transportelemente lösbare Verdrahtungsverbindungen aufweist.

18. Schaltfeldanordnung (4, 6) nach Anspruch 17, dadurch gekennzeichnet, daß die Verdrahtungsverbindungen als Stecker ausgebildet sind.

19. Luftisolierte Schaltanlage (1) zum Umspannen einer Hochspannung, insbesondere einer Spannung zwischen 50 kV und 220 kV, mit einer ersten Schaltfeldanordnung, mindestens einer Sammelschiene (5) und einer zweiten Schaltfeldanordnung, **dadurch gekennzeichnet**, daß zumindest eine der Schaltfeldanordnungen als eine elektrische Schaltfeldanordnung (4, 6) nach einem der Ansprüche 1 bis 18 ausgebildet ist.
